# DEMANDE DE BREVET EUROPEEN

(11) **EP 3 747 941 A1**
(43) Date de publication de la demande: **09.12.2020**
(21) Numéro de dépôt: 20177952.7
(22) Date de dépôt: 03.06.2020
(51) Int. Cl.: C08K 5/34, C08K 5/3445, H01B 3/40, H01B 3/44

(54) **DISPOSITIF ÉLECTRIQUE COMPRENANT UNE COUCHE RÉTICULÉE**

(30) Priorité: 04.06.2019 FR 1905929
(71) Demandeur: Nexans, 92400 Courbevoie (FR)
(72) Inventeur: MALHEURTY, Laureene, 71000 MACON (FR); BILLEMAZ, Didier, 01120 NIEVROZ (FR); NGUYEN, My Hanh Linda, 69007 LYON (FR)
(74) Mandataire: Ipsilon

(57) **Abrégé**

La présente invention se rapport à un dispositif électrique comprenant au moins une couche réticulée obtenue à partir d'une composition polymère comprenant :
- au moins un polymère comprenant une ou plusieurs fonction(s) époxy, et
- au moins un agent de réticulation,
caractérisé en ce que l'agent de réticulation est choisi parmi :
- une amine cyclique non aromatique,
- d'un imidazole de formule (I) 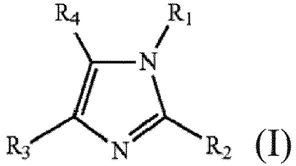 dans laquelle R₁ et R₂ représente indépendamment l'un de l'autre un atome d'hydrogène ou un groupement hydrocarboné, R₃ et R₄ représentent indépendamment l'un de l'autre un atome d'hydrogène ou un groupement hydrocarboné, ou R₃ et R₄ forment ensemble avec les atomes de carbone du cycle imidazole auxquels ils se rattachent, un cycle, ledit imidazole étant associé à un coagent de réticulation comprenant au moins une fonction réactive apte à réagir avec la fonction époxy dudit polymère, et
- un de leurs mélanges.

## Description

La présente invention se rapporte à un dispositif électrique, notamment du type câble électrique ou accessoire pour câble électrique. Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles électriques peuvent comprendre typiquement un conducteur électrique central et au moins une couche électriquement isolante réticulée par voie peroxyde. La voie peroxyde tend de plus en plus à être évitée par rapport aux produits de décomposition du peroxyde, présentant des inconvénients lors de la fabrication du câble, voire même une fois le câble en configuration opérationnelle. En effet, lors de la réticulation, les peroxydes se décomposent et forment des sous-produits de réticulation tels que notamment du méthane, de l'acétophénone, de l'alcool cumylique, de l'acétone, du tertiobutanol, de l'alpha-méthyle styrène et/ou de l'eau. La formation d'eau à partir d'alcool cumylique est relativement lente et peut se produire après plusieurs mois, voire quelques années une fois que le câble est en configuration opérationnelle. Le risque de claquage des couches réticulées est ainsi augmenté de façon significative. En outre, si le méthane formé au cours de l'étape de réticulation n'est pas évacué des couches réticulées, des risques liés à l'explosivité du méthane et sa capacité à s'enflammer ne doivent pas être ignorés. Ce gaz peut également occasionner des dégâts une fois le câble mis en service. Même si des solutions existent pour limiter la présence de méthane au sein du câble, telles que par exemple traiter le câble thermiquement afin d'accélérer la diffusion de méthane en dehors du câble, elles deviennent longues et coûteuses lorsque l'épaisseur des couches réticulées est importante.

On connaît le document US-4 826 726 qui décrit un conducteur électrique résistant à la chaleur, entouré par une couche réticulée obtenue à partir d'une composition comprenant un copolymère éthylénique comprenant une fonction oxirane, et un composé polymérique en tant qu'agent de réticulation, du type copolymère d'éthylène et d'anhydride d'acide dicarboxylique insaturé.

Le but de la présente invention est de pallier les inconvénients des techniques de l'art antérieur en proposant un dispositif électrique, notamment du type câble électrique ou accessoire pour câble électrique, comprenant au moins une couche réticulée dont la fabrication limite de façon significative la présence de sous-produits de réticulation, comme par exemple le méthane et/ou l'eau, tout en garantissant une vitesse et une densité de réticulation optimales

La présente invention a pour objet un dispositif électrique comprenant au moins une couche réticulée obtenue à partir d'une composition polymère comprenant au moins un polymère comprenant une ou plusieurs fonction(s) époxy, et au moins un agent de réticulation, caractérisé en ce que l'agent de réticulation est choisi parmi :
- une amine cyclique non aromatique,
- un imidazole de formule (I) : 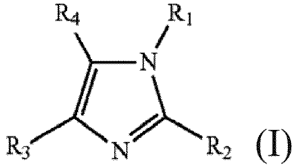 dans laquelle R₁ et R₂ représente indépendamment l'un de l'autre un atome d'hydrogène ou un groupement hydrocarboné, R₃ et R₄ représentent indépendamment l'un de l'autre un atome d'hydrogène ou un groupement hydrocarboné, ou R₃ et R₄ forment ensemble avec les atomes de carbone du cycle imidazole auxquels ils se rattachent, un cycle, ledit imidazole étant associé à un coagent de réticulation comprenant au moins une fonction réactive apte à réagir avec la fonction époxy dudit polymère, et de préférence au moins deux fonctions réactives aptes à réagir avec les fonctions époxy dudit polymère, et
- un de leurs mélanges.

De préférence, R₁ et R₂ ne peuvent pas être tous les deux des atomes d'hydrogène : en d'autres termes, lorsque R₁ est un atome d'hydrogène, R₂ est un groupement hydrocarboné, et lorsque R₂ est un atome d'hydrogène, R₁ est un groupement hydrocarboné.

De façon particulièrement préférée, R₁ et R₂ représente indépendamment l'un de l'autre un groupement hydrocarboné.

Grâce à l'invention, la couche réticulée permet d'éviter l'utilisation de peroxyde organique, tout en améliorant le temps de réticulation et/ou la densité de réticulation.

En outre, la couche réticulée de l'invention présente l'avantage d'être économique, facile à mettre en œuvre, notamment par extrusion, et facile à fabriquer, puisqu'elle ne nécessite pas de recourir à des procédés contraignants de dégazage.

### L'agent de réticulation

Dans un premier mode de réalisation, l'agent de réticulation est une amine cyclique non aromatique, et de préférence une amine cyclique non aromatique saturée. On entend par « saturée », une amine cyclique non aromatique ne comprenant aucune insaturation, notamment du type double liaison carbone-carbone ou triple liaison carbone-carbone.

Ladite amine cyclique non aromatique peut comprendre une ou plusieurs fonctions amine, pouvant être du type amine primaire ou secondaire.

De préférence, l'agent de réticulation de ce premier mode de réalisation peut être une diamine cyclique non aromatique, et de façon particulièrement préférée une diamine cyclique non aromatique saturée.

A titre d'exemple d'agent de réticulation utilisé dans ce premier mode de réalisation, on peut citer le 1,4-diazabicyclo[2.2.2]octane (DABCO), 1,5-diazabicyclo[4.3.0]non-5-ene (ou DBN), ou le 1,8-Diazabicyclo[5.4.0]undéc-7-ène (DBU).

L'amine cyclique non aromatique peut en outre être associée à au moins un imidazole de formule (I) et/ou à au moins un coagent de réticulation comprenant au moins une fonction réactive apte à réagir avec la fonction époxy dudit polymère, l'imidazole de formule (I) et ledit coagent de réticulation étant tels que décrits ci-après dans le deuxième mode de réalisation. En d'autres termes, la composition polymère peut comprendre ladite amine cyclique non aromatique, et optionnellement ledit imidazole de formule (I) et/ou ledit coagent de réticulation.

La composition polymère conforme à l'invention peut comprendre une quantité d'amine cyclique non aromatique en quantité nécessaire et suffisante pour obtenir la couche réticulée.

A titre d'exemple, la composition polymère conforme à l'invention peut comprendre au plus 10,0 parties en poids d'amine cyclique non aromatique pour 100 parties en poids de polymère(s) dans la composition, de préférence au plus 5,0 parties en poids d'amine cyclique non aromatique pour 100 parties en poids de polymère(s) dans la composition, et de préférence au plus 2,0 parties en poids d'amine cyclique non aromatique pour 100 parties en poids de polymère(s) dans la composition. Une quantité supérieure à 10,0 parties en poids pourrait induire un grillage de la composition polymère lors de sa mise en œuvre, ou en d'autres termes induire une réticulation précoce de la composition polymère lors de sa mise en œuvre, notamment par extrusion, formant ainsi des défauts de surface en sortie d'extrudeuse.

La composition polymère conforme à l'invention peut comprendre au moins 0,01 parties en poids d'amine cyclique non aromatique pour 100 parties en poids de polymère(s) dans la composition, et de préférence au moins 0,05 parties en poids d'amine cyclique non aromatique pour 100 parties en poids de polymère(s) dans la composition.

Dans un deuxième mode de réalisation, l'agent de réticulation est un imidazole de formule (I) : 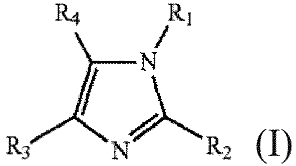 dans laquelle,
- R₁ représente un atome d'hydrogène ou un groupement hydrocarboné,
- R₂ représente un atome d'hydrogène ou un groupement hydrocarboné identique ou différent de R₂,
- R₃ représente un atome d'hydrogène ou un groupement hydrocarboné, et
- R₄ représente un atome d'hydrogène ou un groupement hydrocarboné, identique ou différent de R₃.
R₃ et R₄ peuvent former ensemble avec les atomes de carbone du cycle imidazole auxquels ils se rattachent, un cycle.

Plus particulièrement, dans la formule (I) de l'imidazole selon l'invention:
- R₁ représente un atome d'hydrogène, ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peut éventuellement être interrompu par un ou plusieurs hétéroatomes et/ou substitué ;
- R₂ représente un atome d'hydrogène, ou un groupement alkyle ayant de 1 à 20 atomes de carbone, cycloalkyle ayant de 5 à 24 atomes de carbone, aryle ayant de 6 à 30 atomes de carbone ou aralkyle ayant de 7 à 25 atomes de carbone; groupement qui peuvent éventuellement être interrompus par un ou plusieurs hétéroatomes et/ou substitué ;
- R₃ et R₄ représentent indépendamment l'un de l'autre des groupements identiques ou différents choisis parmi un atome d'hydrogène ou les groupements alkyles ayant de 1 à 20 atomes de carbone, cycloalkyles ayant de 5 à 24 atomes de carbone, aryles ayant de 6 à 30 atomes de carbone ou aralkyles ayant de 7 à 25 atomes de carbone; groupements qui peuvent éventuellement être interrompus par des hétéroatomes et/ou substitués.
R₃ et R₄ peuvent former ensemble avec les atomes de carbone du cycle imidazole auxquels ils se rattachent, un cycle choisi parmi les cycles aromatiques, hétéroaromatiques ou aliphatiques, comprenant de 5 à 12 atomes de carbone, de préférence 5 ou 6 atomes de carbone.
De préférence, R₁ et R₂ ne peuvent pas être tous les deux des atomes d'hydrogène : en d'autres termes, lorsque R₁ est un atome d'hydrogène, R₂ est un groupement hydrocarboné, et lorsque R₂ est un atome d'hydrogène, R₁ est un groupement hydrocarboné, et de préférence R₁ et R₂ représente indépendamment l'un de l'autre un groupement hydrocarboné.

De façon particulièrement préférée, dans la formule (I) de l'imidazole selon l'invention :
- R₁ représente un groupement alkyle ayant de 1 à 20 atomes de carbone ;
- R₂ représente un groupement alkyle ayant de 1 à 20 atomes de carbone ; et
- R₃ et R₄ représentent des atomes d'hydrogène.

L'imidazole de formule (I) de l'invention peut être par exemple choisi parmi le 1,2-dimethylimidazole, 1-methylimidazole, 2-methylimidazole, 1-(2-cyanoethyl)-2-methylimidazole, et le 2-ethyl-4-methylimidazole.

Ledit imidazole de formule (I) peut être avantageusement associé à un coagent de réticulation comprenant au moins une fonction réactive apte à réagir avec la fonction époxy dudit polymère, et de préférence au moins deux fonctions réactives aptes à réagir avec les fonctions époxy dudit polymère, lesdites fonctions réactives pouvant être identiques ou différentes. En d'autres termes, la composition polymère peut comprendre ledit imidazole et ledit coagent de réticulation.

Ledit imidazole et ledit coagent de réticulation peuvent en outre être associés à au moins une amine cyclique non aromatique telle que décrite ci-avant dans le premier mode de réalisation. En d'autres termes, la composition polymère peut comprendre ledit imidazole, ledit coagent de réticulation, et optionnellement ladite amine cyclique non aromatique.

Le coagent de réticulation de l'invention peut être un composé polymérique ou un composé non polymérique. De préférence, l'agent de réticulation est différent du polymère comprenant une ou plusieurs fonction(s) époxy.

Lorsque le coagent de réticulation est un composé polymérique, il peut être de préférence un polyéthylène glycol, par exemple un polyéthylène glycol diacide.

Lorsque le coagent de réticulation de l'invention est du type « non polymérique », il n'est pas issu de l'enchaînement covalent d'un grand nombre de motifs monomères identiques ou différents, et de préférence il n'est pas issu de l'enchaînement covalent d'au moins deux motifs monomères identiques ou différents.

Le coagent de réticulation comprend au moins une fonction réactive pouvant être choisie parmi une fonction anhydride, une fonction carboxyle et une fonction amine.

De préférence, le coagent de réticulation peut comprendre au moins deux fonctions réactives, identiques ou différentes, aptes à réagir avec les fonctions époxy dudit polymère, ces fonctions réactives étant choisies indifféremment parmi une fonction anhydride, une fonction carboxyle et une fonction amine.

La fonction réactive du coagent de réticulation est plus particulièrement apte à réagir avec la fonction époxy dudit polymère pour permettre la réticulation dudit polymère. Elle va notamment réagir sur la fonction époxy lors d'une élévation de température entrainant l'ouverture de l'époxy.

Le coagent de réticulation peut comprendre de préférence :
- au moins une fonction amine et au moins une fonction carboxyle, ou
- plusieurs fonctions carboxyle.

Dans un mode de réalisation particulièrement préféré, le coagent de réticulation peut être choisi parmi un acide aminé, un acide carboxylique, un anhydride, et un de leurs mélanges.

L'acide aminé comprend typiquement deux fonctions : une fonction carboxyle -COOH, et une fonction amine qui est de préférence du type amine primaire - NH₂. La chaîne carbonée séparant la fonction carboxyle de la fonction amine peut comprendre un ou plusieurs atomes de carbone, de préférence de 1 à 50 atomes de carbone, et de préférence de 1 à 20 atomes de carbone. La chaîne carbonée peut être ramifiée. Un ou plusieurs hétéroatomes peuvent être présents sur la chaine carbonée à intervalle régulier ou non. Préférentiellement, ces hétéroatomes sont des atomes d'oxygène ou d'azote, l'atome d'azote pouvant être substitué ou non. Classiquement, les fonctions carboxyle et amine peuvent être positionnées aux extrémités de la chaîne carbonée principale dudit acide aminé, la chaîne carbonée principale étant de préférence une chaîne non ramifiée. L'acide aminé peut être également un acide alpha-aminé se définissant par le fait que la fonction amine est liée à l'atome de carbone adjacent à la fonction carboxyle (le carbone alpha).

L'acide aminé peut être par exemple l'acide 11 amino-undécanoïque, l'acide 6-aminohexanoique, ou un acide d'amino-polyethyleneglycol tel que par exemple l'acide alpha-amino-24(ethylene glycol)-omega-propionique.

L'acide carboxylique peut être un composé organique comprenant une ou plusieurs fonctions carboxyle, sous forme polymérique ou non.

L'acide carboxylique peut être par exemple choisi parmi les acides dicarboxyliques, les polyéthylène glycol diacide, les copolymères d'oléfine et d'acide dicarboxylique insaturé, les copolymères d'oléfine et d'acide monocarboxylique insaturé.

L'acide dicarboxylique peut ne pas être sous forme de polymère et être, par exemple, l'acide dodécanedioique.

L'anhydride (ou anhydride d'acide) peut être un composé organique comprenant au moins une fonction anhydride. Il peut en outre comprendre une chaine aliphatique comprenant au moins 5 atomes de carbone, cette chaîne pouvant être saturée ou insaturée, pouvant comprendre ou non des hétéroatomes

A titre d'exemple, l'anhydride peut être par exemple choisi parmi les anhydrides alkényle succinique, les copolymères d'oléfine et d'anhydride d'acide dicarboxylique insaturé, l'anhydride maléique, et l'anhydride phtalique.

Selon un mode de réalisation préféré, l'amine cyclique non aromatique peut être associée à au moins un coagent de réticulation comprenant au moins deux fonctions réactives apte à réagir avec la fonction époxy du polymère, ledit au moins un coagent de réticulation pouvant être un acide aminé tel que défini précédemment, un acide dicarboxylique, un composé organique sous forme polymérique comprenant au moins deux fonctions carboxyles, ou un de leurs mélanges. Selon ce mode de réalisation, l'amine cyclique non aromatique peut ne pas être associée à un imidazole de formule (I).

La composition polymère conforme à l'invention peut comprendre une quantité d'imidazole de formule (I) et/ou de coagent de réticulation en quantité nécessaire et suffisante pour obtenir la couche réticulée.

A titre d'exemple, la composition polymère conforme à l'invention peut comprendre au plus 15,0 parties en poids d'imidazole de formule (I) pour 100 parties en poids de polymère(s) dans la composition, de préférence au plus 10,0 parties en poids d'imidazole de formule (I) pour 100 parties en poids de polymère(s) dans la composition, et de préférence au plus 5,0 parties en poids d'imidazole de formule (I) pour 100 parties en poids de polymère(s) dans la composition. Une quantité supérieure à 15,0 parties en poids pourrait induire un grillage de la composition polymère lors de sa mise en œuvre.

La composition polymère conforme à l'invention peut comprendre au moins 0,1 parties en poids d'imidazole de formule (I) pour 100 parties en poids de polymère(s) dans la composition, et de préférence au moins 0,5 parties en poids d'imidazole de formule (I) pour 100 parties en poids de polymère(s) dans la composition.

A titre d'exemple, la composition polymère conforme à l'invention peut comprendre au plus 15,0 parties en poids de coagent de réticulation pour 100 parties en poids de polymère(s) dans la composition, de préférence au plus 10,0 parties en poids de coagent de réticulation pour 100 parties en poids de polymère(s) dans la composition, et de préférence au plus 5,0 parties en poids de coagent de réticulation pour 100 parties en poids de polymère(s) dans la composition. Une quantité supérieure à 15,0 parties en poids pourrait non seulement induire un t90 selon la norme ISO 6502 (2018) relativement long, notamment un t90 d'au moins 30 minutes, mais également une réversion induisant un réarrangement du réseau de réticulation.

La composition polymère conforme à l'invention peut comprendre au moins 0,1 parties en poids de coagent de réticulation pour 100 parties en poids de polymère(s) dans la composition, et de préférence au moins 0,5 parties en poids de coagent de réticulation pour 100 parties en poids de polymère(s) dans la composition Une quantité inférieure à 0,1 parties en poids pourrait limiter la densité de réticulation.

Dans la présente invention, lorsque l'on parle de « 100 parties en poids de polymère(s) », on entend préférentiellement le ou les polymères différents du coagent de réticulation dans la composition polymère, lorsque le coagent de réticulation est sous forme de polymère.

Dans un troisième mode de réalisation, le premier mode de réalisation et le deuxième mode de réalisation peuvent être combinés.

### Le polymère comprenant une ou plusieurs fonction(s) époxy

Le polymère comprenant une ou plusieurs fonction(s) époxy de l'invention est dénommé « polymère P » dans la suite de la description.

La fonction époxy (i.e. fonction époxyde) du polymère P est plus particulièrement une fonction oxirane (i.e. un groupement d'oxyde d'éthylène).

De préférence, la fonction époxy peut être apportée par un composé comprenant ladite fonction époxy, ce composé pouvant être choisi parmi les esters de glycidyle. Ainsi, le polymère de l'invention peut comprendre des groupements d'ester de glycidyle.

Le polymère P de l'invention peut comprendre au plus 50% en poids de fonction époxy, de préférence au plus 10% en poids de fonction époxy, et de préférence au plus 5% en poids de fonction époxy.

Le polymère P de l'invention peut comprendre au moins 0,1 % en poids de fonction époxy, et de préférence au moins 0,5% en poids de fonction époxy.

Selon une première variante, la fonction époxy du polymère P peut être greffée sur ledit polymère. Le polymère comprenant au moins une fonction époxy de l'invention est, selon cette première variante, un polymère greffé époxy. En d'autres termes, le polymère selon l'invention peut être un polymère comprenant au moins une fonction époxy greffée sur la chaine macromoléculaire (i.e. chaîne principale ou « backbone ») dudit polymère. Les extrémités de la chaîne macromoléculaire du polymère peuvent être quant à elles greffées ou non avec la fonction époxy.

Selon une deuxième variante, le polymère comprenant au moins une fonction époxy de l'invention peut être un copolymère obtenu à partir d'au moins deux monomères, l'un des deux monomères comprenant ladite fonction époxy. Ledit monomère comprenant ladite fonction époxy peut être choisi parmi les composés suivants : monoglycidylester d'acide butène carboxylique, méthacrylate de glycidyle, acrylate de glycidyle, acrylate de méthylglycidyle, méthacrylate de méthylglycidyle, glycidylester d'acide itaconique, méthacrylate de 7,8-epoxy-1-octyl, méthylglycidylester d'acide itaconique, éther vinylique 7,8-epoxy-1-octyl, éther glycidylique de vinyle, éther allylglycidique et éther glycidylique de 2-methyl-2-propenyl.

Le polymère P de l'invention est plus particulièrement un polymère organique, pouvant être du type élastomère ou non, permettant notamment de mettre en forme par extrusion la composition polymère.

Le polymère P peut comprendre au moins une polyoléfine. Le terme « polyoléfine » en tant que tel signifie de façon générale polymère d'oléfine du type homopolymère ou copolymère d'oléfine. De préférence, ledit polymère d'oléfine est un polymère d'oléfine non cyclique.

Dans la présente invention, on préférera utiliser un polymère d'éthylène (homo- ou copolymère d'éthylène) ou un polymère de propylène (homo- ou copolymère de propylène).

Selon une première variante de l'invention, le polymère P peut être un homopolymère d'oléfine greffé époxy ou un copolymère d'oléfine greffé époxy.

Selon une seconde variante de l'invention, le polymère P peut être un copolymère, obtenu à partir d'au moins un monomère d'oléfine, de préférence d'éthylène, et un monomère comprenant au moins une fonction époxy, tel que décrit ci-avant.

Dans un mode de réalisation particulier, le polymère de l'invention peut comprendre en outre une ou plusieurs fonction(s) permettant avantageusement de rendre plus polaire ledit polymère afin de lui conférer d'autres propriétés d'utilisation à savoir par exemple une meilleure résistance aux huiles et une plus grande souplesse ou flexibilité. A titre d'exemple, le polymère P peut comprendre au moins une fonction acrylate et/ou au moins une fonction vinyl acétate.

De façon particulièrement avantageuse, le ou les polymères constitutifs de la composition polymère de l'invention peuvent être uniquement un ou des polymère(s) à base d'oléfine, ou en d'autres termes le ou les polymères constitutifs de la composition polymère de l'invention peuvent être uniquement un ou des polymère(s) obtenus à partir d'un ou de plusieurs monomère(s) d'oléfine (i.e. homopolymère et/ou copolymère d'oléfine).

Le polymère P de l'invention peut être plus particulièrement, un copolymère obtenu par copolymérisation à partir :
- d'un ou de plusieurs monomère(s) d'oléfine, de préférence du type éthylène et/ou propylène,
- un monomère comprenant au moins une fonction époxy,
- optionnellement, un ou plusieurs monomère(s) choisi indépendamment parmi un monomère comprenant au moins une fonction acrylate et un monomère comprenant au moins une fonction vinyl acétate.

A titre d'exemple, le polymère P de l'invention peut être choisi parmi :
- un copolymère d'éthylène et de méthacrylate de glycidyle,
- un copolymère d'éthylène, d'acétate de vinyle, d'un acrylate, et d'un monomère comprenant au moins une fonction époxy,
- un copolymère d'éthylène, de propylène et de monomère diénique (couramment connu sous le nom d'EPDM), copolymérisé avec un monomère comprenant au moins une fonction époxy. Le monomère diénique peut être choisi parmi l'éthylène norbornène (ENB), le vinylnorbornène (VNB), le dicyclopentadiène (DCPD), et
- un copolymère d'éthylène et de propylène, copolymérisé avec un monomère comprenant au moins une fonction époxy.

La composition polymère de l'invention peut comprendre plus de 50,0 parties en poids de polymère P, de préférence au moins 70 parties en poids de polymère P, et de préférence au moins 90 parties en poids de polymère P, pour 100 parties en poids de polymère(s) dans la composition polymère.

Dans la présente invention, lorsque l'on parle de « 100 parties en poids de polymère(s) », on entend préférentiellement le ou les polymères différents du coagent de réticulation dans la composition polymère, lorsque le coagent de réticulation est sous forme de polymère.

### Charge(s)

La composition polymère de l'invention peut en outre comprendre une ou plusieurs charge(s).

La charge de l'invention peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence d'abaisser la température de la couche réticulée et de limiter la propagation des flammes le long du dispositif électrique. On parle notamment de propriétés de retard à la flamme, bien connues sous l'anglicisme "flame retardant".

La charge inerte peut être, quant à elle, de la craie, du talc, de l'argile (e.g. le kaolin), du noir de carbone, ou des nanotubes de carbone.

Selon une première variante, le noir de carbone, en tant que charge électriquement conductrice, pourra être préféré pour obtenir une couche réticulée semi-conductrice, et pourra être introduit dans la composition polymère en une quantité suffisante pour rendre la composition semi-conductrice.

Selon une seconde variante, le noir de carbone pourra être utilisé en faible quantité pour améliorer les propriétés diélectriques d'une couche électriquement isolante.

La composition polymère peut comprendre au moins 5 parties en poids de charge pour 100 parties en poids de polymère dans la composition polymère, de préférence au moins 10 parties en poids de charge pour 100 parties en poids de polymère dans la composition polymère, de préférence au moins 20 parties en poids de charge pour 100 parties en poids de polymère dans la composition polymère, et encore plus préférentiellement au moins 50 parties en poids de charge pour 100 parties en poids de polymère dans la composition polymère.

L'ajout d'une charge telle que décrite dans l'invention peut entraîner une élévation de température lors de la mise en œuvre de la composition polymère, et de ce fait induire une réticulation prématurée de la composition polymère. Ainsi, pour éviter toute réticulation prématurée de la composition polymère, il est préférable que l'ajout de la charge soit réalisé de façon à ce qu'il n'y ait pas de réticulation prématurée de la composition polymère lors de sa mise en œuvre. Plus particulièrement, l'agent de réticulation peut être avantageusement ajouté à la composition polymère dans une étape distincte et postérieure à celle de l'ajout de la charge.

Selon une autre caractéristique de l'invention, et afin de garantir un dispositif électrique dit HFFR pour l'anglicisme " Halogen-Free Flame Retardant ", le dispositif électrique, ou en d'autres termes les éléments qui composent ledit dispositif électrique, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

### Additif(s)

La composition polymère peut typiquement comprendre en outre des additifs en une quantité de 0,1 à 20 % en poids par rapport au poids total de la composition polymère.

Les additifs sont bien connus de l'homme du métier et peuvent être par exemple choisis parmi :
- des agents de protection, tels que des antioxydants, des anti-UV, des anti-cuivre, des agents anti-arborescences d'eau,
- des agents de mise en œuvre, tels que des plastifiants, des lubrifiants, des huiles,
- des agents compatibilisants,
- des agents de couplage,
- des retardateurs de grillage,
- des pigments ou des colorants, et
- un de leurs mélanges.

Plus particulièrement, les antioxydants permettent de protéger la composition des contraintes thermiques engendrées lors des étapes de fabrication du dispositif ou de fonctionnement du dispositif.

Les antioxydants sont choisis de préférence parmi :
- les antioxydants phénoliques à encombrement stérique tels que le tetrakisméthylene(3,5-di-t-butyl-4-hydroxy-hydrocinnamate) méthane, le octadecyl 3-(3,5-di-t-butyl-4-hydroxyphényle)propionate, le 2,2'- thiodiéthylène bis[3-(3,5-di-t-butyl-4-hydroxyphényle) propionate], le 2,2'-Thiobis(6-t-butyle-4-méthylephénol), le 2,2'-méthylenebis(6-t-butyle-4-méthylphénol), le 1,2-Bis(3,5-di-t-butyle-4-hydroxyhydrocinnamoyl) hydrazine, et le 2,2'-oxamido-bis[éthyl 3(3,5-di-t-butyle-4-hydroxyphényle) propionate] ;
- les thioéthers tels que le 4,6-bis(octylthiométhyle)-o-crésol, le bis[2-méthyle-4-{3-n-alkyle (C12 ou C14)thiopropionyloxy}-5-t-butylphényle]sulfide et le thiobis-[2-t-butyl-5-méthyle-4,1-phénylène] bis [3-(dodecyltio)propionate] ;
- les antioxydants à base de soufre tels que le Dioctadecyl-3,3'-thiodipropionate ou le Didodecyl-3,3'-thiodipropionate ;
- les antioxydants à base de phosphore tels que les phosphites ou phosphonates comme par exemple le Tris(2,4-di-t-butyl-phényle)phosphite ou le Bis(2,4-di-t-butylphényle) pentaerythritol diphosphite ; et
- les antioxydants de type amine tels que les phénylènes diamines (IPPD, 6PPD....), les diphénylamines styrènés, les diphénylamines, les mercapto benzimidazoles et le 2,2,4-trimethyl-1,2 dihydroquinoline polymérisé (TMQ.

Le type de stabilisant et son taux dans la composition polymère de l'invention peuvent être choisis en fonction de la température maximale subie par les polymères pendant la production du mélange et pendant leur mise en œuvre, notamment par extrusion, ainsi que selon la durée maximale d'exposition à cette température.

### La couche réticulée et le dispositif électrique

Dans la présente invention, la couche réticulée peut être facilement caractérisée par la détermination de la densité de réticulation donnée par la valeur mesurée de M_{H}-M_{L} selon la norme ISO 6502 (2018), avec un rhéomètre à disque oscillant (connu sous l'anglicisme « Moving Die Rheometer (MDR) »). Cette valeur est exprimée en dN.m et représente la différence de couple mesurée par le disque oscillant avant et après formation complète du réseau de réticulation.

Plus particulièrement, ladite couche réticulée peut avoir avantageusement une valeur de M_{H}-M_{L} d'au moins 2,0, de préférence d'au moins 3,0, de préférence d'au moins 4,0, et de façon particulièrement préférée d'au moins 5,0.

La couche réticulée de l'invention peut être une ou plusieurs des couches choisie(s) parmi une couche électriquement isolante, une couche semi-conductrice, un élément de bourrage et une gaine de protection.

Dans la présente invention, on entend par « couche électriquement isolante » une couche dont la conductivité électrique peut être d'au plus 1.10⁻⁹ S/m (siemens par mètre) (à 25°C).

Dans la présente invention, on entend par « couche semi-conductrice » une couche dont la conductivité électrique peut être supérieure à 1.10⁻⁹ S/m (siemens par mètre), de préférence d'au moins 1.10⁻³ S/m, et de préférence peut être inférieure à 1.10³ S/m (à 25°C).

Lorsque la couche réticulée de l'invention est une couche semi-conductrice, la composition polymère de l'invention peut comprendre une charge électriquement conductrice en une quantité suffisante pour rendre la couche réticulée de l'invention semi-conductrice.

Le dispositif électrique de l'invention peut être un câble électrique ou un accessoire pour câble électrique. Plus particulièrement, la couche réticulée peut être destinée à entourer ou peut entourer un élément électriquement conducteur allongé.

Selon un premier mode de réalisation, le dispositif électrique selon l'invention est un câble électrique comprenant ladite couche réticulée entourant un élément électriquement conducteur allongé.

La couche réticulée de l'invention peut entourer l'élément électriquement conducteur allongé selon plusieurs variantes.

Selon une première variante, la couche réticulée peut être directement en contact physique avec l'élément électriquement conducteur allongé. On peut parler dans cette première variante de câble basse tension.

Selon une deuxième variante, la couche réticulée peut être au moins l'une des couches d'un système isolant comprenant :
- une première couche semi-conductrice entourant l'élément électriquement conducteur,
- une couche électriquement isolante entourant la première couche semi-conductrice, et
- une deuxième couche semi-conductrice entourant la couche électriquement isolante. On peut parler dans cette deuxième variante de câble moyenne ou haute tension.

Selon un deuxième mode de réalisation, le dispositif électrique selon l'invention est un accessoire pour câble électrique, ledit accessoire comprenant ladite couche réticulée.

Ledit accessoire est destiné à entourer un câble électrique, et de préférence à entourer au moins une extrémité d'un câble électrique. L'accessoire peut être notamment une jonction ou une terminaison pour câble électrique.

L'accessoire peut être typiquement un corps longitudinal creux, tel que par exemple une jonction ou une terminaison pour câble électrique, dans lequel au moins une partie d'un câble électrique est destinée à être positionnée.

L'accessoire comporte au moins un élément semi-conducteur et au moins un élément électriquement isolant, ces éléments étant destinés à entourer une extrémité d'un câble électrique. L'élément semi-conducteur est bien connu pour contrôler la géométrie du champ électrique, lorsque le câble électrique, associé audit accessoire, est sous tension.

La couche réticulée de l'invention peut être ledit élément semi-conducteur et/ou ledit élément électriquement isolant de l'accessoire.

Lorsque l'accessoire est une jonction, cette dernière permet de connecter ensemble deux câbles électriques, la jonction étant destinée à entourer au moins en partie ces deux câbles électriques. Plus particulièrement, l'extrémité de chaque câble électrique destiné à être connecté est positionnée à l'intérieur de ladite jonction.

Lorsque le dispositif de l'invention est une terminaison pour câble électrique, la terminaison est destinée à entourer au moins en partie un câble électrique. Plus particulièrement, l'extrémité du câble électrique destiné à être connecté est positionnée à l'intérieur de ladite terminaison.

Lorsque le dispositif électrique est un accessoire pour câble électrique, la couche réticulée est de préférence une couche moulée par des techniques bien connues de l'homme du métier.

Dans la présente invention, l'élément électriquement conducteur allongé du câble électrique peut être un fils métallique ou une pluralité de fils métalliques, torsadé(s) ou non, notamment en cuivre et/ou en aluminium, ou un de leurs alliages.

La couche réticulée de l'invention peut être une couche extrudée ou une couche moulée, par des procédés bien connus de l'homme du métier. Lorsque le dispositif électrique est un câble électrique, la couche réticulée est de préférence une couche extrudée. Lorsque le dispositif électrique est un accessoire pour câble électrique, la couche réticulée est de préférence une couche moulée.

Un autre objet de l'invention concerne un procédé de fabrication d'un dispositif électrique du type câble électrique selon l'invention, caractérisé en ce qu'il comprend les étapes suivantes :
i. extruder la composition polymère autour d'un élément électriquement conducteur allongé, pour obtenir une couche extrudée, et
ii. réticuler la couche extrudée de l'étape i.

L'étape i peut être réalisée par des techniques bien connues de l'homme du métier, à l'aide d'une extrudeuse.

Lors de l'étape i, la température au sein de l'extrudeuse ne doit pas dépasser préférentiellement la température d'ouverture de la fonction époxy du polymère, afin d'éviter toute réticulation au sein de l'extrudeuse.

La composition en sortie d'extrudeuse est donc dite « non réticulée », la température ainsi que le temps de mise en œuvre au sein de l'extrudeuse étant optimisés en conséquent. A titre d'exemple, la température de mise en œuvre par extrusion de la composition polymère est d'au plus 160°C, et de préférence d'au plus 130°C.

On entend par « non réticulée » une couche dont la valeur mesurée de M_{H}-M_{L} selon la norme ISO 6502 (2018) est inférieur à 2,0, de préférence inférieur à 1,0, et de préférence égale à 0.

En sortie d'extrudeuse, on obtient donc une couche extrudée autour dudit élément électriquement conducteur, pouvant être ou non, directement en contact physique avec ledit élément électriquement conducteur.

Préalablement à l'étape i, les composés constitutifs de la composition polymère de l'invention peuvent être mélangés, notamment avec le polymère P à l'état fondu, afin d'obtenir un mélange homogène. La température au sein du mélangeur peut être suffisante pour obtenir un polymère P à l'état fondu, mais est limitée pour éviter la réticulation du polymère P. Puis, le mélange homogène est conditionné pour alimenter une extrudeuse pour réaliser l'étape i.

L'étape ii peut être réalisée par voie thermique, par exemple à l'aide d'une ligne continue de vulcanisation (« CV line »), d'un tube vapeur, d'un bain de sel fondu, d'un four ou d'une chambre thermique, ces techniques étant bien connues de l'homme du métier. A titre d'exemple, la température de réticulation peut être inférieure à 300°C, et de préférence inférieure ou égale à 200°C.

En sortie d'extrudeuse, la composition extrudée sous forme de couche autour de l'élément électriquement conducteur peut ensuite être soumise à une température suffisante et pendant un temps suffisant, pour pouvoir faire réagir le système de réticulation de ladite invention. On obtient alors une couche extrudée et réticulée.
Un autre objet de l'invention concerne un procédé de fabrication d'un dispositif électrique du type accessoire pour câble électrique, caractérisé en ce qu'il comprend les étapes suivantes :
a. mouler la composition polymère destinée à entourer un élément électriquement conducteur allongé, pour obtenir une couche moulée, et
b. réticuler la couche moulée de l'étape a.

L'étape a peut être réalisée par des techniques bien connues de l'homme du métier, notamment par moulage ou extrusion-moulage.

L'étape b peut être réalisée par voie thermique, par exemple à l'aide d'un moule chauffant, qui peut être le moule utilisé dans l'étape a.

Les conditions mentionnées ci-avant avec l'utilisation d'une extrudeuse, s'appliquent également pour l'utilisation d'un moule chauffant

D'autres caractéristiques et avantages de la présente invention apparaîtront à la lumière de la description d'un exemple non limitatif d'un câble électrique selon l'invention fait en référence aux figures.

La figure 1 représente une vue schématique en coupe transversale d'un câble électrique selon un mode de réalisation préféré conforme à l'invention.

La figure 2 représente une vue schématique d'un dispositif électrique selon l'invention, comprenant une jonction en coupe longitudinale, cette jonction entourant l'extrémité de deux câbles électriques.

La figure 3 représente une vue schématique d'un dispositif électrique selon une première variante de l'invention, comprenant une terminaison en coupe longitudinale, cette terminaison entourant l'extrémité d'un unique câble électrique.

Pour des raisons de clarté, seuls les éléments essentiels pour la compréhension de l'invention ont été représentés de manière schématique, et ceci sans respect de l'échelle.

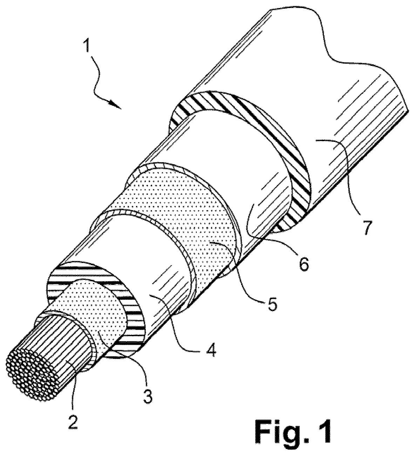

Le câble d'énergie 1 à moyenne ou haute tension, illustré dans la figure 1, comprend un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite "couche semi-conductrice interne", une couche 4 électriquement isolante, une deuxième couche 5 semi-conductrice dite "couche semi-conductrice externe", un écran métallique 6 de mise à la terre et/ou de protection, et une gaine extérieure de protection 7.

La couche 4 électriquement isolante est une couche extrudée et réticulée, obtenue à partir de la composition polymère selon l'invention.

Les couches semi-conductrices sont également des couches extrudées et réticulées, pouvant être obtenues à partir de la composition polymère selon l'invention.

La présence de l'écran métallique 6 et de la gaine extérieure de protection 7 est préférentielle, mais non essentielle, cette structure de câble étant en tant que telle bien connue de l'homme du métier.

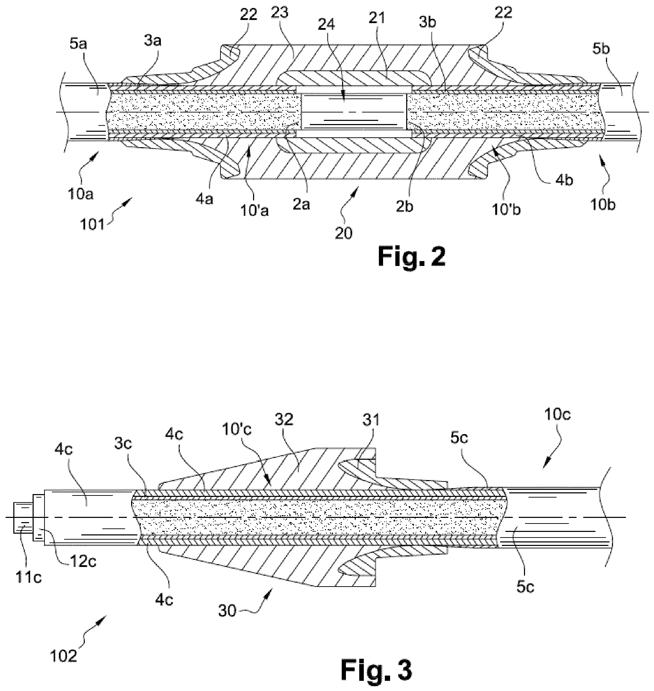

La figure 2 représente un dispositif 101 comprenant une jonction 20 entourant en partie deux câbles électriques 10a et 10b.

Plus particulièrement, les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Au moins un des éléments choisis parmi le premier élément semi-conducteur 21, le second élément semi-conducteur 22 et ledit élément électriquement isolant 23, peut être une couche réticulée telle que décrite dans l'invention.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

Ces câbles électriques 10a et 10b peuvent être ceux décrits dans la présente invention.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La figure 3 représente un dispositif 102 comprenant une terminaison 30 entourant un unique câble électrique 10c.

Plus particulièrement, le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Au moins un des éléments choisi parmi l'élément semi-conducteur 31 et l'élément électriquement isolant 32 peut être une couche réticulée telle que décrite dans l'invention.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

Ce câble électrique 10c peut être celui décrit dans la présente invention.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

### EXEMPLES

Les tableaux 1 à 3 ci-dessous rassemblent des compositions polymères chargées destinées à être réticulées, dont les quantités sont exprimées en parties en poids pour cent parties en poids de polymère(s) dans la composition polymère.

Les compositions C1 à C4 sont des compositions polymères comparatives, et les compositions I1 à I11 sont des compositions polymères conformes à l'invention.

Ces compositions comprennent 100 parties en poids d'un polymère P conforme à l'invention.

**[Tableaux 1]**

| **Compositions polymères** | **C1** | **C2** | **I1** | **I2** | **I3** | **I4** | **I5** |
|---|---|---|---|---|---|---|---|
| Polymère P | 100 | 100 | 100 | 100 | 100 | 100 | 100 |
| Charge ignifugeante | 140 | 140 | 140 | 140 | 140 | 140 | 140 |
| Additifs | 9 | 9 | 9 | 9 | 9 | 9 | 9 |
| Agent de réticulation 1 | 0 | 0 | 1,00 | 0 | 1,00 | 1,00 | 1,00 |
| Agent de réticulation 2 | 0 | 0,50 | 0 | 0,50 | 0 | 0,50 | 0,50 |
| Coagent de réticulation 1 | 0,70 | 0 | 0 | 0,70 | 0,70 | 0,70 | 0 |
| ts2 exprimé en minute | 11,59 | 8,33 | 2,29 | 3,85 | 1,98 | 1,83 | 2,08 |
| t90 exprimé en minute | 42,48 | 36,10 | 20,72 | 23,11 | 21,38 | 16,39 | 14,50 |
| M_{H}-M_{L} exprimé en dN.m | 4,84 | 5,37 | 5,64 | 6,44 | 5,98 | 6,00 | 5,73 |

**[Tableaux 2]**

| **Compositions polymères** | **C2** | **C3** | **I6** | **I7** | **I8** |
|---|---|---|---|---|---|
| Polymère P | 100 | 100 | 100 | 100 | 100 |
| Charge ignifugeante | 140 | 140 | 140 | 140 | 140 |
| Additifs | 9 | 9 | 9 | 9 | 9 |
| Agent de réticulation 1 | 0 | 0 | 0 | 1,00 | 1,00 |
| Agent de réticulation 2 | 0,50 | 0 | 0,50 | 0 | 0,50 |
| Coagent de réticulation 2 | 0 | 3,15 | 3,15 | 3,15 | 3,15 |
| ts2 exprimé en minute | 8,33 | - | 3,26 | 1,56 | 1,55 |
| t90 exprimé en minute | 36,10 | 54,14 | 9,15 | 6,45 | 6,20 |
| M_{H}-M_{L} exprimé en dN.m | 5,37 | 5,64 | 5,85 | 6,92 | 6,64 |

**[Tableaux 3]**

| **Compositions polymères** | **C2** | **C4** | **I9** | **I10** | **I11** |
|---|---|---|---|---|---|
| Polymère P | 100 | 100 | 100 | 100 | 100 |
| Charge ignifugeante | 140 | 140 | 140 | 140 | 140 |
| Additifs | 9 | 9 | 9 | 9 | 9 |
| Agent de réticulation 1 | 0 | 0 | 0 | 1,00 | 1,00 |
| Agent de réticulation 2 | 0,50 | 0 | 0,50 | 0 | 0,50 |
| Coagent de réticulation 3 | 0 | 5,00 | 5,00 | 5,00 | 5,00 |
| ts2 exprimé en minute | 8,33 | 37,79 | 3,18 | 2,03 | 2,06 |
| t90 exprimé en minute | 36,10 | 53,57 | 16,32 | 11,75 | 11,55 |
| M_{H}-M_{L} exprimé en dN.m | 5,37 | 3,08 | 8,64 | 9,82 | 9,09 |

L'origine des composés des tableaux 1 à 3 est la suivante :
- Polymère P est un copolymère d'éthylène, d'acétate de vinyle, d'acrylate et de méthacrylate de glycidyle (GMA), commercialisé par la société Denka sous la référence Denka ER 5300 ;
- Charge ignifugeante est un hydroxyde métallique du type trihydroxyde d'aluminium ;
- Additifs sont des agents de mise en œuvre ;
- Agent de réticulation 1 est une amine cyclique non aromatique, notamment le 1,4-diazabicyclo[2.2.2]octane, commercialisé par la société Merck sous la référence 1,4-diazabicyclo[2.2.2]octane (CAS n°280-57-9) ;
- Agent de réticulation 2 est un imidazole, notamment le 1,2-dimethylimidazole commercialisé par la société Alfa Aesar, sous la référence 1,2-dimethylimidazole (CAS n°280-57-9) ;
- Coagent de réticulation 1 est un acide aminé, notamment l'acide amino-11-undécanoïque, commercialisé par la société SIGMA-ALDRICH sous la référence acide amino 11 undécanoïque (Cas n°2432-99-7) ;
- Coagent de réticulation 2 est un acide dicarboxylique sous forme de polymère, notamment le polyéthylène glycol diacide, commercialisé par la société Merck sous la référence Polyéthylène glycol diacide 600 ; et
- Coagent de réticulation 3 est un acide dicarboxylique, qui n'est pas sous forme de polymère, notamment l'acide dodecanedioique, commercialisé par la société SIGMA-ALDRICH sous la référence acide dodecanedioique (CAS n°693-23-2).

Les compositions polymères C1 à C4 et I1 à I11 ont été réticulées sous les mêmes conditions.

Dans un premier temps, on prépare les compositions comme suit : un master batch est préparé à l'aide d'un mélangeur interne ayant un volume de 1600 cm³, avec préchauffage à 60°C et incorporation directe du polymère P et d'une partie de la charge ignifugeante (environ un tiers) pour faciliter le mélange.

Puis on ajoute le reste de la charge ignifugeante avec les additifs à une température suffisante pour garantir un mélange homogène de la composition (i.e. ramollissement du polymère P) sans faire réagir les époxy du polymère P. A titre d'exemple, cette température peut être comprise entre 80 et 110°C, et peut être notamment de 105°C.

L'ajout de l'agent de réticulation et/ou du coagent de réticulation se fait ensuite à une température pour ne pas déclencher la réticulation, telle que par exemple à 40°C, à l'aide d'un mélangeur à cylindres, puis la composition polymère ainsi obtenue est calandrée à 3 mm pour former une plaque de 3 mm d'épaisseur, et pouvoir réaliser ensuite des essais rhéométriques avec un rhéomètre du type MDR2000 commercialisé par Alpha Technologies.

Dans un second temps, la réticulation de la composition polymère est suivie par le rhéomètre pendant 60 min à 180°C avec une oscillation de 0,5°.

Les tableaux 1 à 3 rassemblent également les résultats obtenus après réticulations des compositions polymères C1 à C4 et I1 à I11. Ces résultats concernent le début de réticulation (ts2) des compositions, le temps de réticulation (t90) des compositions, et la densité de réticulation (M_{H}-M_{L}) des compositions.

Le ts2 correspond au temps au bout duquel, à une température donnée de mesure, on obtient une valeur de M_{H}-M_{L} = 2 dN.m. Il est déterminé selon la norme ISO 6502 (2018) telle que décrite dans la présente invention. La température de mesure pour les valeurs des compositions polymères est de 180°C.

Le t90 est le temps au bout duquel on obtient 90% de la valeur de M_{H} mesurée au MDR obtenue à une température donnée, cette température dans les exemples étant de 180°C. Il est déterminé selon la norme ISO 6502 (2018) et peut être avantageusement inférieur à 30 min, de préférence d'au plus 25 min, de préférence d'au plus 20 min, et de façon particulièrement préférée d'au plus 15 min.

La densité de réticulation est donnée par la valeur mesurée de M_{H}-M_{L} selon la norme ISO 6502 (2018) avec un rhéomètre à disque oscillant (connu sous l'anglicisme « Moving Die Rheometer (MDR) »). Cette valeur est exprimée en dN.m et représente la différence de couple mesurée par le disque oscillant avant et après formation complète du réseau de réticulation dans la composition polymère. Plus le réseau tridimensionnel formé est dense lors de la réticulation, plus la valeur de M_{H}-M_{L} est élevée.

## Revendications

1. Dispositif électrique comprenant au moins une couche réticulée obtenue à partir d'une composition polymère comprenant :
- au moins un polymère comprenant une ou plusieurs fonction(s) époxy, et
- au moins un agent de réticulation,
**caractérisé en ce que** l'agent de réticulation est choisi parmi :
- une amine cyclique non aromatique,
- un imidazole de formule (I) 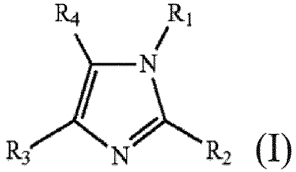 dans laquelle R₁ et R₂ représente indépendamment l'un de l'autre un atome d'hydrogène ou un groupement hydrocarboné, R₃ et R₄ représentent indépendamment l'un de l'autre un atome d'hydrogène ou un groupement hydrocarboné, ou R₃ et R₄ forment ensemble avec les atomes de carbone du cycle imidazole auxquels ils se rattachent, un cycle, ledit imidazole étant associé à un coagent de réticulation comprenant au moins une fonction réactive apte à réagir avec la fonction époxy dudit polymère, et
- un de leurs mélanges.

2. Dispositif selon la revendication 1, **caractérisé en ce qu'**il est un câble électrique (1) comprenant au moins un élément électriquement conducteur allongé (2), entouré par ladite couche réticulée (3, 4, 5).

3. Dispositif selon la revendication 1, **caractérisé en ce qu'**il est un accessoire (20, 30) pour câble électrique, ledit accessoire comprenant au moins ladite couche réticulée (21, 22, 23, 31, 32).

4. Dispositif selon la revendication 3, **caractérisé en ce que** l'accessoire est une jonction (20) ou une terminaison (30), pour câble électrique.

5. Dispositif selon l'une quelconque des revendications précédentes, **caractérisé en ce que** le polymère comprend des groupements d'ester de glycidyle.

6. Dispositif selon l'une quelconque des revendications précédentes, **caractérisé en ce que** l'amine cyclique non aromatique est une diamine cyclique non aromatique.

7. Dispositif selon l'une quelconque des revendications précédentes, **caractérisé en ce que** la composition polymère comprend de 0,01 à 10,0 parties en poids d'amine cyclique non aromatique pour 100 parties en poids de polymère(s) dans la composition polymère.

8. Dispositif selon l'une quelconque des revendications précédentes, **caractérisé en ce que** dans la formule (I) de l'imidazole, R₁ représente un groupement alkyle ayant de 1 à 20 atomes de carbone ; R₂ représente un groupement alkyle ayant de 1 à 20 atomes de carbone ; et R₃ et R₄ représentent des atomes d'hydrogène.

9. Dispositif selon l'une quelconque des revendications précédentes, **caractérisé en ce que** la composition polymère comprend de 0,1 à 15,0 parties en poids d'imidazole de formule (I) pour 100 parties en poids de polymère(s) dans la composition polymère.

10. Dispositif selon l'une quelconque des revendications précédentes, **caractérisé en ce que** le coagent de réticulation comprend au moins deux fonctions réactives aptes à réagir avec les fonctions époxy dudit polymère

11. Dispositif selon l'une quelconque des revendications précédentes, **caractérisé en ce que** le coagent de réticulation comprend au moins une fonction réactive choisie parmi une fonction anhydride, une fonction carboxyle et une fonction amine.

12. Dispositif selon l'une quelconque des revendications précédentes, **caractérisé en ce que** le coagent de réticulation est choisi parmi un acide aminé, un acide carboxylique, un anhydride, et un de leurs mélanges.

13. Dispositif selon l'une quelconque des revendications précédentes, **caractérisées en ce que** l'amine cyclique non aromatique est associée à au moins un coagent de réticulation comprenant au moins deux fonctions réactives apte à réagir avec la fonction époxy du polymère, ledit au moins un coagent de réticulation pouvant être un acide aminé, un acide dicarboxylique, un composé organique sous forme polymérique comprenant au moins deux fonctions carboxyles, ou un de leurs mélanges.

14. Dispositif selon la revendication 13, **caractérisé en ce que** l'acide dicarboxylique est l'acide dodécanedioique.

15. Dispositif selon l'une quelconque des revendications précédentes, **caractérisé en ce que** la composition polymère comprend de 0,1 à 15,0 parties en poids de coagent de réticulation pour 100 parties en poids de polymère(s) dans la composition polymère.

16. Dispositif selon l'une quelconque des revendications précédentes, **caractérisé en ce que** la composition polymère comprend en outre au moins une charge ignifugeante.

17. Dispositif selon l'une quelconque des revendications précédentes, **caractérisé en ce que** la couche réticulée est une couche électriquement isolante (4, 23, 32).

18. Dispositif selon l'une quelconque des revendications précédentes, **caractérisé en ce que** la couche réticulée est une couche semi-conductrice (3, 5, 21, 22, 31).

19. Dispositif selon l'une quelconque des revendications précédentes, **caractérisé en ce qu'**il comprend une première couche semi-conductrice (3) entourant l'élément électriquement conducteur allongé (2), une couche électriquement isolante (4) entourant la première couche semi-conductrice (3), et une deuxième couche semi-conductrice (5) entourant la couche électriquement isolante (4), la couche réticulée étant au moins l'une de ces trois couches.
